# EUROPÄISCHE PATENTANMELDUNG

(11) **EP 0 956 755 A1**
(43) Veröffentlichungstag der Anmeldung: **17.11.1999**
(21) Anmeldenummer: 99105609.4
(22) Anmeldetag: 19.03.1999
(51) Int. Cl.: A01C 5/06, A01C 7/06

(54) **Furchenöffner**

(30) Priorität: 27.04.1998 US 67267
(71) Anmelder: Deere & Company, Moline, Illinois 61265-8098 (US)
(72) Erfinder: Wendling, Ignatz, Bettendorf, IA 52722 (US); Stephens, Lyle Eugene, Hampton, IL 61256 (US)
(74) Vertreter: Magin, Ludwig Bernhard

(57) **Zusammenfassung**

Die Erfindung bezieht sich auf einen Furchenöffner (10), mit einer ersten, unter einem Winkel befestigten Scheibe (24), die bei einer Vorwärtsbewegung des Furchenöffners (10) eine erste Furche (F1) im Boden erzeugt, sowie einer zweiten Scheibe (70), die einen Furchenöffnerabschnitt aufweist, der zur Vermeidung sich an der zweiten Scheibe (70) bildender Verunreinigungen bezüglich der Bewegungsrichtung in einer Schattenfläche hinter der ersten Scheibe (24) angeordnet ist und eine zweite Furche (S1) im Boden erzeugt. Die zweite Scheibe (70) kann sich mit der ersten Scheibe (24) überdecken und konkav gewölbt sein.

## Beschreibung

Öffnerzusammenbauten wie das kommerziell erhältliche John Deere Modell 750 Grain Drill umfassen eine flache, unter einem Winkel gegenüber der Vorwärtsfahrtrichtung angeordnete Scheibe und ein Tiefeneinstellrad, das der Scheibe nahe benachbart befestigt ist, um die Eindringtiefe einzustellen und die führende Seite der Scheibe zu reinigen. Ein derartiger Öffnerzusammenbau ist in der US-A 4 760 806 gezeigt. Ein Saatgutzuführrohr erstreckt sich entlang der nachlaufenden Seite der Scheibe, wenigstens teilweise im Schatten der Scheibe, um Saatgut in einer durch den Öffnerzusammenbau geformten Furche abzulegen, und ein nachlaufendes Saatverdichtungsrad erzeugt guten Kontakt zwischen dem Saatgut und dem Boden. Bei einigen Verfahren ist es wünschenswert, Dünger in einer Tiefe und Saatgut in einer anderen Tiefe abzulegen, um einen Kontakt zwischen Saatgut und Dünger zu vermeiden und die Verfügbarkeit der Nährstoffe für die jungen Pflanzen zu optimieren. Wenn Dünger direkt zusammen mit der Saatgut abgelegt wird, können Schäden beim Keimen auftreten, und die Verwendung von Stickstoff ist stark eingeschränkt. Das Einbringen von Dünger neben und unter dem abgelegten Saatgut in einem einzigen Verfahrensschritt verringert die Anzahl der Überquerungen über ein Feld und kann helfen, die Bodenfeuchtigkeit aufrechtzuerhalten, da der Boden nicht für längere Zeit offen liegt. Es ist jedoch ein Problem, das Saatbett sauber zu halten, da der Düngeröffner dahin tendiert, den Boden zu beeinträchtigen; diese Bodenbeeinträchtigung vermindert auch die die Feuchtigkeit schonenden Vorteile des einzigen Durchgangs. Um übermäßige Bodenbeeinträchtigung zu vermindern, müssen die Pflanzgeschwindigkeiten reduziert werden. Einzelne Elemente mit doppelter Einbringungsfunktion funktionieren in bestimmten Bodentypen und unter bestimmten Bedingungen nicht befriedigend und haben häufig hohe Kraftanforderungen und Abnutzungscharakteristiken, die wenig optimal sind.

Seit kurzem sind doppelte Ablagesysteme wie der Flexi-Coil Ltd. Barton™ Double Shoot Öffner erhältlich. Das Barton™-System umfaßt eine erste große Scheibe mit umgekehrtem Winkel, bei dem die Oberseite der Scheibe sich zur nachlaufenden Seite der Scheibe hin neigt. Ein Reinigungsrad läuft nah benachbart der großen Scheibe. Eine zweite, entgegengesetzt geneigte Scheibe, die in einem beträchtlichen Abstand hinter der großen Scheibe angeordnet ist, formt eine neue Rinne für das Saatgut in den Boden oberhalb und seitlich der Düngerrinne. Das System des Typs Barton™ hat verschiedene Nachteile, einschließlich des Fehlens einer genauen Tiefensteuerung für die führende Scheibe, die durch die große Entfernung zwischen den Zentren der Scheiben bedingt ist. Die Längenabmessung des Öffnersystems vergrößert Seitenkräfte beim Umdrehen und begrenzt dabei die Wegstrecke, über die die Einrichtung aus der Vorwärtsrichtung gedreht werden kann, während der Öffner im Boden arbeitet. Dem Öffner fehlt außerdem eine gute Trennung von Materialien in bestimmten Bodentypen, die durch das Fehlen einer Einrichtung zum Schließen der Düngerrinne vor dem Öffnen der Saatrinne bedingt sind. Beispielsweise fällt der Boden bei schweren, feuchten Lehmbedingungen nicht wieder in die Düngerrinne zurück. Die Trennung ist ebenfalls eine Funktion der Arbeitsgeschwindigkeit, wobei niedrigere Geschwindigkeiten bei bestimmten Bedingungen nötig sind, um Trennung von Saatgut und Dünger zur Vermeidung von Keimschäden sicherzustellen.

Ein anderes Beispiel eines zweifachen Furchenöffners, der in der US-A 2 920 587 gezeigt ist, umfaßt eine führende flache Scheibe, die eine Düngerfurche öffnet, und eine überlappende, nachlaufende Flachsaatfurchenöffnerscheibe, die eine Trennung zwischen Saatgut und Dünger bewirkt. Ein Tiefeneinstellrad ist an der führenden Scheibe befestigt. Ein derartiger Öffner ist sich aufbauenden Verschmutzungen ausgesetzt, die Tiefensteuerung ist nicht optimal, und die nachlaufende Scheibe ist aufrecht und stellt keine gute Verdichtung des Bodens über dem Dünger bereit. Das nachlaufende, in den Saatfurchen laufende Andrückrad bedeckt das Saatgut nicht hinreichend mit Boden. Das Fehlen von adäquaten Schließsystemen hat Bodenerosionsprobleme zur Folge. Der Öffner ist nur für bearbeiteten Boden geeignet und würde den Widrigkeiten eines unbearbeiteten Bodens nicht widerstehen, da das führende Düngerschar oder der Düngerschuh nicht geschützt angeordnet ist. Der nachlaufende Saatschuh ist gegenüber der führenden Scheibe um einen beträchtlichen Abstand versetzt und um einen Winkel von vier bis fünf Grad gegenüber der Ebene der Vorwärtsbewegung gekröpft. Der Saatschuh hat eine führende gekrümmte Kante seitlich der führenden Scheibe. Die große Versetzung vergrößert die Zugkräfte in unbewirtschafteten Böden, und Abschnitte der Saat- und Düngerschare bedingen häufig Bodenbeeinträchtigungen. Bei nicht bearbeitetem Boden bilden sich Reste und Boden, insbesondere an der gekrümmten führenden Kante des nachlaufenden Saatschuhs.

Der Erfindung liegt das Problem zugrunde, daß bisherige Furchenöffner die geschilderten Nachteile aufweist.

Dieses Problem wird erfindungsgemäß durch die Lehre des Patentanspruchs 1 gelöst, wobei in den weiteren Patentansprüchen Merkmale aufgeführt sind, die die Lösung in vorteilhafter Weise weiterentwickeln.

Es wird ein kombinierter Furchenöffner zum Schaffen von Furchen zum getrennten Ablegen von Saatgut und Dünger vorgeschlagen, der eine erste Scheibe ähnlich der des John Deere Modells 750 Grain Drill Furchenöffner umfaßt, die eine erste Furche erzeugt, in der Dünger abgelegt werden kann, anstelle von Saatgut wie bei dem 750-Gerät. Die erste Scheibe ist vorzugsweise flach. Eine zweite Öffner-Scheibe, die in der Regel kleiner als die erste Scheibe ist, wird an dem Bereich des 750-Geräts, an dem früher das Verdichtungsrad angebracht war, befestigt. Die Neigung der ersten Scheibe bewirkt das Erzeugen einer hinreichend tiefen und breiten ersten Furche, neben der die zweite Scheibe eine zweite Furche erzeugt. Die zweite Scheibe weist somit einen aktiven Furchenöffnerabschnitt auf, der dem jeweils in den Boden tauchenden Bereich der zweiten Scheibe entspricht. Erfindungsgemäß ist dieser Furchenöffnerabschnitt in einer Schattenfläche in Bewegungsrichtung des Furchenöffners hinter der ersten Scheibe angeordnet. Die Schattenfläche ist insbesondere eine bei Projektion eines gebündelten parallelen Lichtstrahls von vorn auf die erste Scheibe erzeugte Schattenfläche; sie kann aber auch durch den Schattenbereich definiert sein, in den die erste Scheibe keine vom Boden aufgenommenen Materialen wirft.

Das vorteilhafte Ergebnis ist, daß die erste Scheibe einen Schutz für den Furchenöffnerabschnitt bereitstellt, da auf dem Boden liegender Unrat oder andere Gegenstände bereits von der ersten Scheibe beiseite geräumt worden sind, bevor sie mit der zweiten Scheibe in Berührung kommen. Außerdem wird der Fluß von Bodenpartikeln und Unrat verbessert. Die Scheiben haben eine hohe Lebensdauer und ermöglichen kleinere Zugkräfte als die meisten bisher erhältlichen zweifachen Ablagesystemen.

Besonders vorteilhaft ist es, wenn sich die zweite Scheibe in der Bewegungsrichtung mit der ersten Scheibe überdeckt, da dann die erste Scheibe einen umfassenden Schutz für die zweite Scheibe bereitstellt. Das schmale Profil der ersten Scheibe und der Schutz der Komponenten im Schatten der Scheiben sorgt für eine lange Lebensdauer, sogar in den härtesten Bedingungen bei unbearbeiteten Böden.

In der Regel wird der Furchenöffner mit einer Einrichtung zum Ablegen eines ersten Materials in der ersten Furche, wie zum Beispiel Dünger ausgestattet sein. Eine derartige Einrichtung (Schar) umfaßt gewöhnlich eine Leitung für das Material. Weiterhin kann der Furchenöffner eine zweite Einrichtung zum Ablegen eines zweiten Materials, wie Saatgut, versehen sein, die das zweite Material in die zweite Furche einbringt. Die zweite Einrichtung ist insbesondere ein Säschar.

In einer bevorzugten Ausführungsform ist die zweite Scheibe derart geformt und positioniert, daß sie beim Erzeugen der zweiten Furche Boden-Material aus der zweiten Furche in die erste Furche einbringt. Nachdem das erste Material in der ersten Furche abgelegt wurde, wird es somit mit Erdmaterial bedeckt, das einen unerwünschten Kontakt zwischen dem ersten Material und anschließend in der zweiten Furche eingebrachtem zweiten Material unterbindet. Wenn das erste Material z.B. Dünger und das zweite Material Saatgut ist, sind keine Keimbildungsprobleme zu befürchten.

Zur mechanischen Befestigung der ersten und zweiten Scheibe an einer den Furchenöffner über ein Feld ziehenden Maschine, wie einem Traktor oder einem Sägerät kommt insbesondere eine Zugstange in Betracht, obwohl auch eine Montage an einem Rahmen, (Fahr-)Gestell oder dergleichen, oder eine separate Anbringung an den einzelnen Scheiben zugeordneten Zugstangen denkbar wäre.

Die zweite Scheibe ist vorzugsweise konkav gewölbt, um durch die Wölbung das Wegschleudern von aufgenommenem Boden zu vermindern und Komponenten innerhalb der konkaven Wölbung geschützt anbringen zu können. Von der ersten oder zweiten Scheibe abgeschleudertes Erdreich oder Unrat können diese Komponenten somit nicht beeinträchtigen. Als geschützt angebrachte Komponenten kommen insbesondere die zweite Einrichtung zum Ablegen des zweiten Materials, also insbesondere Saatguts, in Betracht. Die zweite Einrichtung kann mit einer Saatleitung und einem Säschar versehen sein, das innerhalb der konkaven Wölbung der zweiten Scheibe in der Nähe des rückwärtigen Umfangs der ersten Scheibe endet. Wenn das Säschar somit in der konkaven Wölbung der Scheibe angeordnet ist, braucht das Säschar keinen Boden zur Seite zu drücken, sondern verhindert in erster Linie, daß Unrat in die Saatfurche fällt, bevor das Saatgut in der Furche abgelegt ist. Die konkave Scheibe erlaubt, einen größeren Anteil der die Scheibe halternden Nabe geschützt im Schatten der Scheibe anzubringen, als es bei einer flachen Scheibe gleicher Größe, die unter dem selben Winkel montiert ist, möglich wäre. Die gegen die Oberfläche des Erdbodens wirkende konvexe Oberfläche der zweiten Scheibe stellt eine nach unten wirkende Kraftkomponente von der führenden, sich absenkenden Hälfte der Scheibe auf den Boden bereit, und löst sich dann an der hinteren, aufsteigenden Hälfte der Scheibe vom Boden, wobei die Wahrscheinlichkeit des Anhebens von Bodenteilchen durch die hintere ansteigende Hälfte der Scheibe vermindert ist. Die konkave zweite Scheibe stellt somit nicht nur Furchenöffnungs- und auch -schließfunktionen mit vermindertem Wegschleudern von Boden und verbessertem Bodenerosionsschutz bereit, sondern schafft zusätzlich eine Fläche zur Aufnahme ihrer Nabe, die die Lagerung der Nabe schützt und eine Abschirmung gegen Unrat erleichtert.

Die zweite Einrichtung umfaßt vorzugsweise einen flachen Läufer, der an der flachen Seitenwand der zweiten Furche entlanggleiten kann und verhindert, daß loser Boden in die zweite Furche fällt. Dieser Läufer verläuft vorzugsweise von einem vorderen oberen Segment der zweiten Scheibe bis in ihr unteres hinteres Segment erstreckt, so daß das zweite Material im vorderen oberen Bereich der Scheibe in die zweite Einrichtung eingebracht werden kann, und die zweite Einrichtung im unteren hinteren Bereich der Scheibe wieder verläßt, wo das Material dann in die zweite Furche gelangt.

Der Furchenöffner kann mit einem Tiefeneinstellrad ausgestattet sein, das mit einer Einstellvorrichtung zum Wählen der Tiefe der ersten und zweiten Furche ausgestattet ist, wobei sich die Einstellvorrichtung zum Erzielen eines kompakten Aufbaus durch die Nabe der ersten Scheibe erstrecken kann. Sogar bei hohen Arbeitsgeschwindigkeiten können Saatgut und Dünger homogen verteilt und gut voneinander separiert in den Boden eingebracht werden. Die Verstellbarkeit des Tiefenrades und entsprechende Einstelleinrichtungen an der ersten und zweiten Einrichtung zum Ablegen der jeweiligen Materialien in die Furchen ermöglichen weite Einstellbereiche relativ zueinander wie auch zur Oberfläche des Bodens.

Weiterhin wird empfohlen, daß die führende Kante der zweiten Scheibe in der Nähe der Nabe der ersten Scheibe positioniert ist. Die beiden Scheiben sind also in relativ kurzem Abstand hintereinander angeordnet, was dazu führt, daß der Furchenöffner relativ schmal und auch in der Bewegungsrichtung kompakt ist, was ein besseres Drehen des Geräts während des Betriebs und verbesserte Unempfindlichkeit gegen Unrat und aufgeworfenen Boden zur vorteilhaften Folge hat. Anzumerken ist, daß in der vorliegenden Anmeldung unter führender Kante (oder Oberfläche) der in Bewegungsrichtung jeweils vorderste Rand der Scheibe zu verstehen ist, während der in Bewegungsrand jeweils hinterste Rand der Scheibe als nachlaufende Kante (oder Oberfläche) bezeichnet wird.

In einer bevorzugten Ausführungsform der Erfindung ist die konvexe Seite der zweiten Scheibe der ersten Einrichtung zum Einbringen eines ersten Materials in die erste Furche - und somit der ersten Scheibe - zugewandt, während die konkave Seite der zweiten Scheibe sich zu der von der ersten Scheibe abgewandten Seite hin öffnet. Der Vorteil liegt in der Abschirmung der in der konkaven Wölbung der Scheibe angeordneten Komponenten gegen Unrat und Boden, welche von der ersten Scheibe aufgewirbelt werden könnten.

Die zweite Einrichtung zum Ablegen des zweiten Materials ist vorzugsweise ebenfalls in einer Schattenfläche hinter der ersten Scheibe angebracht. Daher arbeitet die zweite Einrichtung primär in Bereichen des Bodens, die zuvor durch die erste und zweite Scheibe bearbeitet wurden. Da die zweite Einrichtung im wesentlichen nur noch auf die zweite Furche einwirken muß, d. h. darin Material ablegen, werden auf die zweite Einrichtung wirkende Seitenkräfte vermindert.

Wie bereits erläutert, kann die zweite Scheibe Bodenpartikel in der ersten Furche ablegen, um das dort abgelegte Material zu bedecken. Falls die zweite Scheibe gewölbt ist, kann insbesondere ihre konvexe Seite dazu dienen, Boden in die erste Furche bzw. auf dort abgelegtes Material zu transportieren. Die führende Kante der zweiten Scheibe formt somit die zweite Furche und läuft in zunächst unbearbeitetem Boden, aber ist hinreichend nahe an der ersten Furche, um dort eingebrachtes Material, wie den Dünger mit ihrer konvexen, also nach außen gewölbten Seite zu verdichten und mit Boden zu bedecken.

Außerdem ist vorgeschlagen, den Furchenöffner mit einem schließenden Rad zu versehen, das direkt hinter der ersten Scheibe am Öffnerzusammenbau angelenkt und gegenüber der konkaven Wölbung der zweiten Scheibe abgewinkelt sein kann, um Boden von der Flanke der zweiten Furche zu lösen und letztere zu schließen.

Die Kante der konkaven zweiten Scheibe ist vorzugsweise an der Innenseite der konkaven Wölbung abgeschrägt, im Gegensatz zu einer konventionellen konkaven Scheibe, um die für die Erstellung der zweiten Furche und das Schließen der ersten Furche notwendigen Kräfte zu vermindern.

Weiterhin ist empfohlen, daß sich die zweite Einrichtung zum Ablegen des zweiten Materials bis in die Nähe der ersten Scheibe erstreckt, da sie dann gegebenenfalls Verunreinigungen von der benachbarten Oberfläche der ersten Scheibe entfernen, d. h. abstreifen kann.

Es hat sich als zweckmäßig erwiesen, die erste und/oder zweite Scheibe gegenüber der Bewegungsrichtung in einem Winkel gleicher Richtung, einem sogenannten Steuerwinkel anzubringen. Als vorteilhaft hat sich ein Winkel von etwa drei bis fünfzehn Grad erwiesen. Die zweite Scheibe kann auch gegenüber einer vertikalen Ebene im Winkel angebracht sein, der vorzugsweise etwa zwölf Grad beträgt. Die derart gekröpfte Achse der zweiten Scheibe unterstützt auch eine bessere Verdichtung des Bodens in der ersten Furche und vermindert Abschleudern von Boden nach oben.

Schließlich ist empfohlen, die zweite Einrichtung mit einem Abstreifer zu versehen, der Verunreinigungen von der zweiten Scheibe entfernt. Der Abstreifer ist insbesondere im oberen vorderen Segment der zweiten Scheibe, an ihrer konkaven Innenseite angebracht.

In den Zeichnungen ist ein nachfolgend näher beschriebenes Ausführungsbeispiel der Erfindung dargestellt. Es zeigt:
- Fig. 1: eine perspektivische Rückseitenansicht eines separaten Ablageöffners;
- Fig. 2: eine Seitenansicht des Furchenöffners der Figur 1 von der Dünger- und Drillscharseite des Öffners aus;
- Fig. 3: eine Rückseitenansicht des Öffners der Figur 1;
- Fig. 4: eine Draufsicht auf den Öffner der Figur 1;
- Fig. 5: eine vom Boden des Öffners der Figur 1 aus gesehene Ansicht; und
- Fig. 6a-6c: Bodenprofile der während des Betriebs des Öffners geformte Dünger- und Saatfurchen.

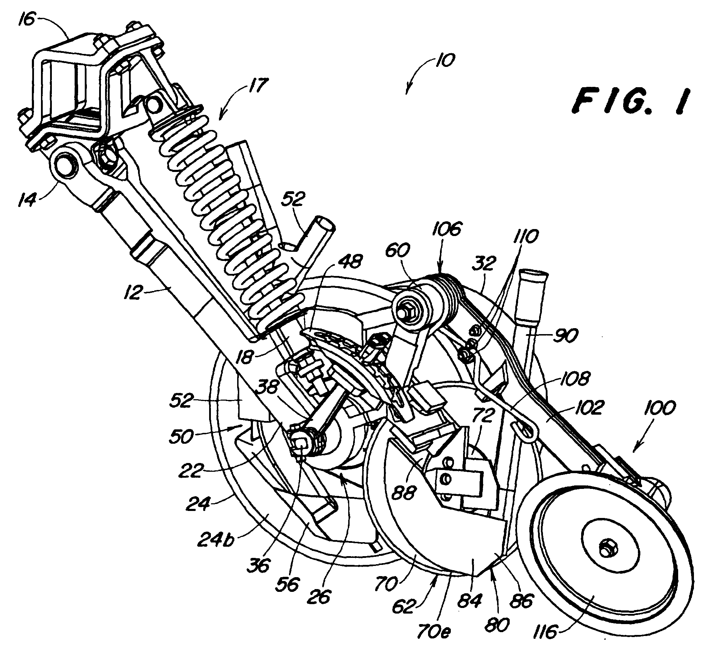

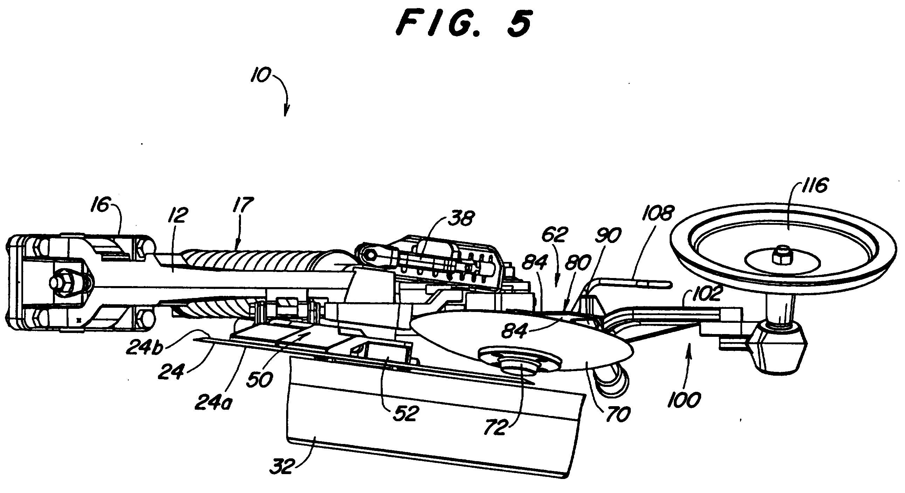

Im folgenden wird Bezug genommen auf die im wesentlichen maßstabsgetreu gezeichneten Figuren 1 - 6, in denen ein zweifacher Säfurchenöffner oder Öffnerzusammenbau 10 gezeigt ist, der eine Zugstange 12 aufweist mit einem vorderen Anschlußende 14, das schwenkbar mit einer Klammer 16 verbunden ist, die an einer sich transversal erstreckenden Anhängschiene oder einem Rahmenteil (nicht gezeigt) eines Sägeräts oder einer ähnlichen Einrichtung befestigt ist. Ein nach unten drückender Federzusammenbau 17 ist mit dem oberen Ende der Klammer 16 und einer mit einer Öffnung versehenen Federauflagefläche 18 verbunden, die sich vom unteren Ende der Zugstange 12 nach oben erstreckt. Der Federzusammenbau 17 ist im wesentlichen von dem Typ, der in der US-A 5 727 638 gezeigt und beschrieben ist, die einen gemeinsamen Inhaber mit der vorliegenden Anmeldung hat und deren Inhalt durch Verweis hierin aufgenommen wird.

Die Zugstange 12 ersteckt sich nach unten und hinten zu einem tiefsten Ende 22, an dem ein Sech oder eine Flachscheibe 24 drehbar an einem Achs- und Nabenzusammenbau 26 befestigt ist. Die Scheibe 24 liegt im wesentlichen in einer vertikalen Ebene und ist in einem spitzen Winkel von vorzugsweise größenordnungsmäßig sieben Grad gegenüber der Vorwärtsrichtung (Steuerwinkel) gekröpft, um eine führende bzw. nachlaufende Schneideoberfläche (24a und 24b) zu definieren. Die Scheibe 24 ist vorzugsweise in der Größenordnung von 18 Zoll (46 cm) Durchmesser. Ein Tiefeneinstellrad 32 ist um eine im wesentlichen parallel zur Drehachse der Scheibe 24 verlaufende, aber davon versetzte Achse drehbar befestigt, um die Tiefe zu steuern und um die Oberfläche 24a zu reinigen und zu verhindern, daß in der Nähe der Oberfläche 24a Boden abgeschleudert wird. Eine Achse 36 erstreckt sich durch den Naben-Zusammenbau 26 und trägt einen Tiefeneinstellhandgriff 38 an der Drillscharseite des Öffners 10. Ein Tiefeneinstellradträgerarm 42 ist mit dem gegenüberliegenden Ende der Achse 36 verbunden und erstreckt sich entlang der führenden Oberfläche 24a, um das Tiefeneinstellrad 32 drehbar zu haltern. Ein Schaltsegment 48 stützt sich oberhalb des Nabenzusammenbaus 26 an der Zugstange 12 ab und nimmt den Tiefeneinstell-Handgriff 38 auf, der angehoben werden kann, um die Achse um einen Winkel zu drehen, und das Tiefeneinstellrad 32 relativ zur Scheibe 24 einzustellen und dabei die Arbeitstiefe des Öffners 10 einzustellen. Wenn das Tiefeneinstellrad 32 in der gewünschten Position ist, wird der Tiefeneinstell-Handgriff 38 wieder freigegeben, so daß er wieder mit dem Schaltsegment in Eingriff gelangt, um die gewählte Tiefeneinstellradposition aufrechtzuerhalten.

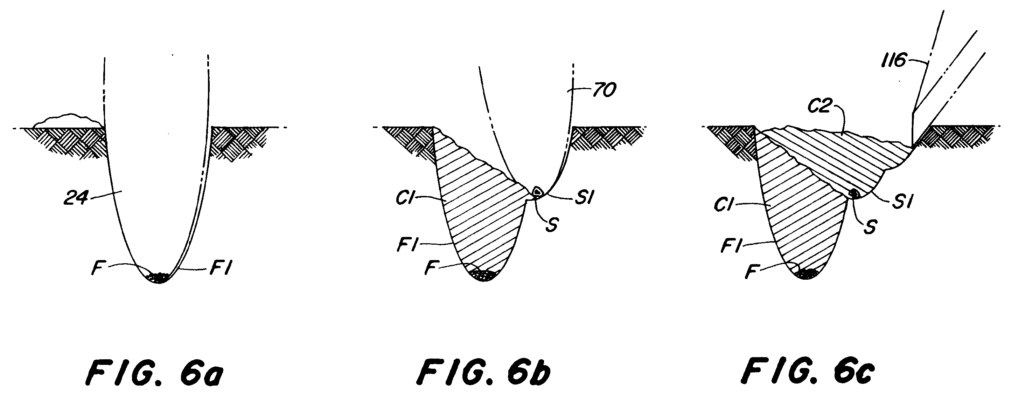

Ein Düngerscharzusammenbau 50 ist in Vorwärtsrichtung vor der Drehachse der Scheibe 24 mit der Zugstange 12 verbunden. Der Düngerscharzusammenbau 50 umfaßt ein Düngerzuführrohr 52, das sich nach unten bis in die Nähe des nach vorn weisenden Abschnitts des Nabenzusammenbaus 26 erstreckt und nach hinten unter den Nabenzusammenbau 26 in die von der nachlaufenden Oberfläche 24b definierte Schattenfläche abgewinkelt ist. Eine untere Düngerscharverlängerung 56 ragt nach hinten unter den Nabenzusammenbau 26 nahe des tiefsten Abschnitts der Scheibe 24, um Dünger F (Fig. 6a) in der Furche F1 abzulegen.

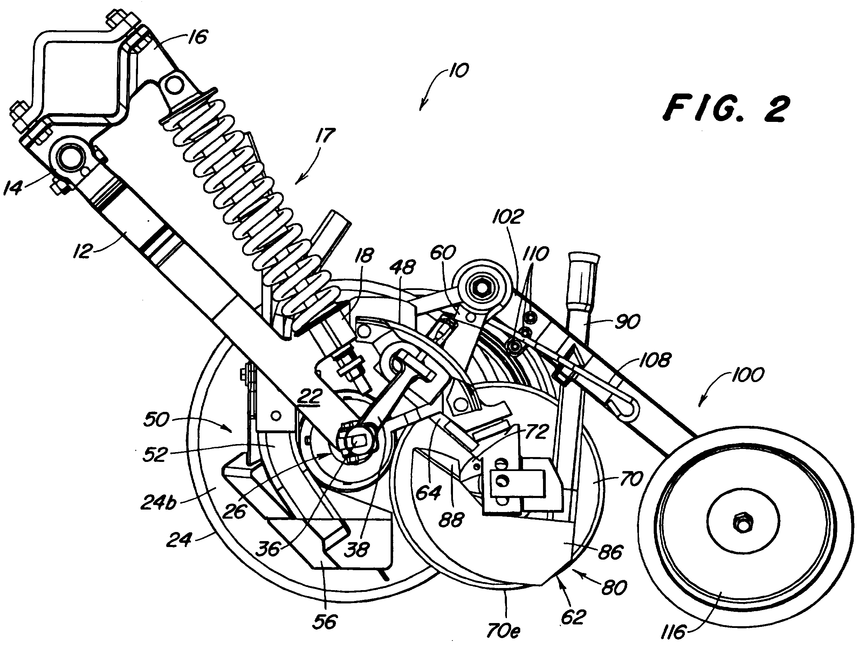

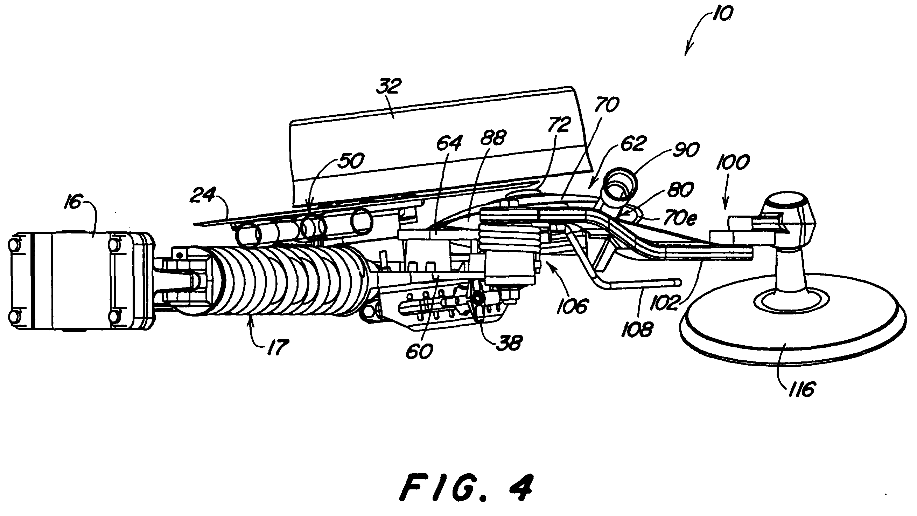

Die Zugstange 12 umfaßt einen sich aufwärts und nach hinten erstreckenden Abschnitt 60, der an einem nach unten und hinten gerichteten Arm 64 einen vertikal einstellbaren Öffnerzusammenbau 62 mit einer konkaven Scheibe 70 trägt. Der Öffnerzusammenbau 62 ist direkt hinter dem Nabenzusammenbau 26 nahe benachbart der nachlaufenden Oberfläche 24b angeordnet und umfaßt eine konkave Scheibe 70, die sich an der von der Scheibe 24 abgewandten Seite öffnet (d.h. in den Figuren 1 und 2 zum Betrachter hin). Die Scheibe 70 wird von einem Lager- und Nabenzusammenbau 72 am unteren Ende des Arms 64 getragen. Wie am besten aus den Figuren 1 bis 3 erkennbar ist, ist der Lager- und Nabenzusammenbau 72 im wesentlichen innerhalb der konkaven Wölbung der Scheibe 70 angeordnet, und der Zusammenbau 72 ist aus Gründen des Schutzes und verbesserten Boden- und Unrat-Flusses ebenfalls im Schatten (s. Figuren 4 - 5) der Scheibe 70 angeordnet. Die konkave Scheibe 70 ist vorzugsweise größenordnungsmäßig 12 Zoll (30 cm) im Durchmesser (etwa 2/3 des Durchmessers der führenden Scheibe 24) und unter einem Winkel gegen die Vorwärtsrichtung (Steuerwinkel) von zwischen drei und fünfzehn Grad und unter einem Winkel gegen eine vertikale Ebene von weniger als ca. 20 Grad (Neigungswinkel) abgestützt. Ein Steuerwinkel von sieben Grad in derselben Richtung wie der Steuerwinkel der führenden Scheibe 24 und ein Neigungswinkel von zwölf Grad haben sich unter fast allen Bedingungen als besonders gut funktionierend herausgestellt. Die Konkavität und der Neigungswinkel der Scheibe 70 stellen vorteilhafterweise ein gutes Schließen der Düngerfurche und gute Verdichtungscharakteristiken in Verbindung mit einer Verhinderung des Anhebens und Fortschleuderns des Bodens bereit, die in den meisten bisher erhältlichen zweifachen Öffneranordnungen nicht verfügbar waren. Die konvexe Oberfläche der Scheibe 70, die gegen die Oberfläche des Bodens arbeitet, stellt eine nach unten auf den Boden gerichtete Kraftkomponente von der führenden, sich absenkenden Hälfte der Scheibe 70 bereit. Die Oberfläche der Scheibe 70 erstreckt sich von der rückseitigen, aufsteigenden Hälfte der Scheibe 70 fort, um Anheben und Fortschleudern des Bodens zu vermeiden. Die Neigung der Scheibe 70 aus der vertikalen Ebene unterstützt dieses Verhalten.

Ein Säscharzusammenbau 80 wird durch den Arm 64 im wesentlichen innerhalb der konkaven Wölbung der Scheibe 70 und des Schattens der Scheibe 24 gehalten. Der Scharzusammenbau 80 umfaßt einen Läufer 84, der sich von der führenden Kante der Scheibe 70 im oberen, vorderen Segment der Scheibe 70 in der Nähe des Nabenzusammenbaus 26 nach unten und hinten gebogen bis zu einem untersten und hintersten Endabschnitt 86 in der Nähe des unteren hinteren Segments der Scheibe 70 erstreckt. Der Läufer 84 ist flach und liegt im Schatten der Scheibe 70 zwecks guter Abnutzungscharakteristiken. Der Läufer 84 gleitet an der Seitenwand der neu geformten Saatfurche entlang, um zu verhindern, daß loser Boden in die Saatfurche zurückfällt. Die Saatfurche wird seitlich und oberhalb der Düngerfurche F1 durch die untere, vordere Kante der Scheibe 70 erzeugt, die oberflächlich in unberührtem Boden nahe der tiefsten Stelle des unteren vorderen Segments der Scheibe 70 knapp außerhalb des Schattens der Scheibe 24 läuft. Boden C1 (Figur 6b) wird über die erste Furche F1 geschoben, um das erste Material F zu bedecken. Wie am besten in den Figuren 1, 2 und 4 erkennbar ist, ist die Kante der Scheibe (70e) an der inneren konkaven Wölbung der Scheibe 70 abgeschrägt, im Gegensatz zu der normalerweise an konkaven Scheiben abgeschrägten Seite, um beim Formen einer Saatfurche in jungfräulichem Boden in der Nähe des hinteren Abschnitts der Scheibe 24 besser in den Boden eindringen zu können. Ein Abstreifer 88 ist am oberen vorderen Abschnitt des Läufers 84 befestigt, um die Innenseite der Scheibe 70 frei von übermäßigem Aufbau von Verunreinigungen zu halten.

Ein aufrechtes Saatrohr 90 erstreckt sich im wesentlichen vertikal von einer Verbindung mit einer Quelle zu pflanzenden Saatguts (nicht gezeigt) zu einem untersten Ende zwischen dem Abschnitt 86 und dem unteren hinteren Segment der Scheibe 70. Der gerade Weg des Saatguts von der Quelle stellt eine gute Positionierung des Saatguts und gute Tiefensteuercharakteristiken bereit. Das untere Ende des Saatrohrs 90 öffnet sich in der Nähe des hinteren Abschnitts 86 des flachen Läufers 84 und nahe dem unteren hinteren Segment der konkaven Scheibe 70 oberhalb und an einer Seite der Düngerfurche F (Fig. 6b) nach unten. Die Düngerfurche F1 wird durch die Einwirkung der abgewinkelten und geneigten konkaven Scheibe 70 gründlich geschlossen, um einen Kontakt des Saatguts S mit dem durch den Düngerscharzusammenbau 50 abgelegten Dünger F zu verhindern.

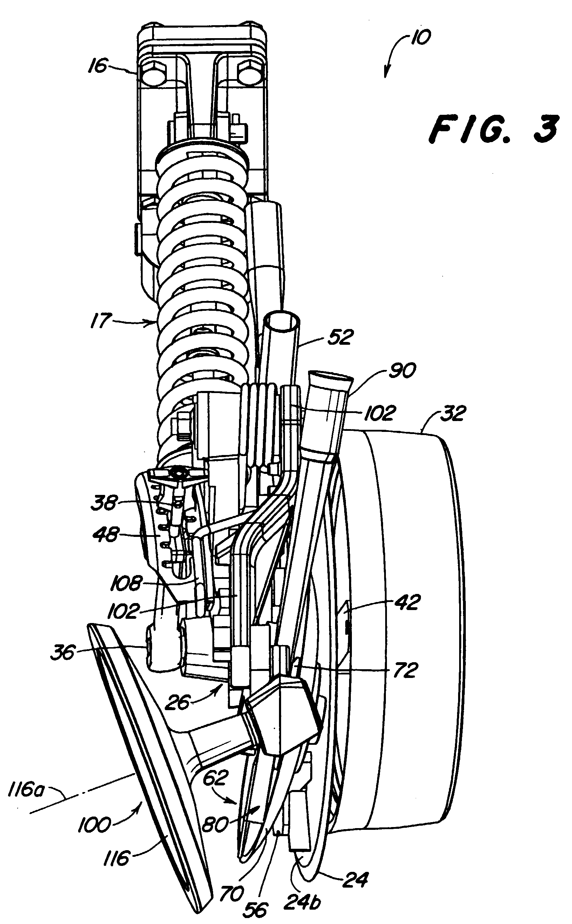

Ein Furchenschlußzusammenbau 100 wird hinter der Scheibe 70 durch das untere hintere Ende eines Arms 102 gehalten, der ein oberes vorderes Ende hat, das schwenkbar mit dem Abschnitt 60 der Zugstange 12 verbunden ist. Ein nach unten drückender Federzusammenbau 106 mit einem Einstellhandgriff 108, der selektiv in Rastaufnahmen 110 auf dem Arm 102 aufgenommen ist, stellt eine einstellbare, nach unten gerichtete Kraft auf den Zusammenbau 100 bereit. Ein schließendes Rad 116 ist am hinteren Ende des Arms 102 um eine Achse 116a (Figur 3) drehbar befestigt, die nach unten in Richtung der konkaven Wölbung der Scheibe 70 abgewinkelt ist. Das schließende Rad 116 ist an der konkaven Scheibenseite des Zusammenbaus (Fig. 3 - 5) gekröpft, um Boden C2 von der Seite der Saatfurche S1 (Fig. 6c) zu schieben und das Saatgut S vollständig zu bedecken und die Furche zu schließen. Die durch das schließende Rad bereitgestellte Bedeckungs- und Verfüllungswirkung stellt ein gutes Bodenoberflächenprofil zum Schutz gegen Erosion bereit.

Nachdem die bevorzugte Ausführungsform beschrieben wurde, ist erkennbar, daß unterschiedliche Abwandlungen möglich sind, ohne vom Schutzbereich der Erfindung abzuweichen, wie er in den nachfolgenden Ansprüchen definiert ist.

## Patentansprüche

1. Furchenöffner (10), mit einer ersten, unter einem Winkel befestigten Scheibe (24), die bei einer Vorwärtsbewegung des Furchenöffners (10) eine erste Furche (F1) im Boden erzeugt, sowie einer zweiten Scheibe (70), die einen Furchenöffnerabschnitt aufweist, der bezüglich der Bewegungsrichtung in einer Schattenfläche hinter der ersten Scheibe (24) angeordnet ist und eine zweite Furche (S1) im Boden erzeugt.

2. Furchenöffner nach Anspruch 1, dadurch gekennzeichnet, daß sich die zweite Scheibe (70) in Bewegungsrichtung mit der ersten Scheibe (24) überdeckt.

3. Furchenöffner nach Anspruch 1 oder 2, gekennzeichnet durch eine erste Einrichtung zum Ablegen eines ersten Materials, beispielsweise Dünger (F), in der ersten Furche (F1).

4. Furchenöffner nach einem der vorhergehenden Ansprüche, gekennzeichnet durch eine zweite Einrichtung zum Ablegen eines zweiten Materials, beispielsweise Saatgut (S), in der zweiten Furche (S1).

5. Furchenöffner nach einem der vorhergehenden Ansprüche, dadurch gekennzeichnet, daß die zweite Scheibe (70) beim Erzeugen der zweiten Furche (S1) die erste Furche (F1) zudeckt und einen Kontakt zwischen einem in der ersten Furche (F1) abgelegten ersten Material und einem in der zweiten Furche (S1) abgelegten zweiten Material unterbindet.

6. Furchenöffner nach einem der vorhergehenden Ansprüche, dadurch gekennzeichnet, daß die erste Scheibe (24) und die zweite Scheibe (70) an einer Zugstange (12) angebracht sind.

7. Furchenöffner nach einem der vorhergehenden Ansprüche, dadurch gekennzeichnet, daß die zweite Scheibe (70) konkav ist.

8. Furchenöffner nach Anspruch 7, dadurch gekennzeichnet, daß die zweite Einrichtung zum Ablegen eines zweiten Materials innerhalb der konkaven Wölbung der zweiten Scheibe (70) angeordnet ist.

9. Furchenöffner nach Anspruch 7 oder 8, dadurch gekennzeichnet, daß die zweite Einrichtung zum Ablegen eines zweiten Materials einen im wesentlichen innerhalb der konkaven Wölbung der zweiten Scheibe (70) angeordneten flachen Läufer (84) umfaßt, der sich vorzugsweise von einem vorderen oberen Segment der zweiten Scheibe (70) bis in ihr unteres hinteres Segment erstreckt.

10. Furchenöffner nach einem der vorhergehenden Ansprüche, gekennzeichnet durch ein Tiefeneinstellrad (32), das verstellbar in der Nähe der führenden Oberfläche der ersten Scheibe (24) angeordnet ist.

11. Furchenöffner nach einem der vorhergehenden Ansprüche, dadurch gekennzeichnet, daß die erste Scheibe (24) und die zweite Scheibe (70) eine erste bzw. zweite Nabe aufweisen, wobei die zweite Scheibe eine führende Kante hat, die nahe der ersten Nabe (26) an der nachlaufenden Oberfläche der ersten Scheibe (24) endet.

12. Furchenöffner nach einem der Ansprüche 3 bis 11, dadurch gekennzeichnet, daß die zweite Scheibe (70) eine nahe der ersten Einrichtung zum Ablegen eines ersten Materials angebrachte konvexe Seite aufweist, und eine konkave Seite, die sich zu der von der ersten Scheibe (24) abgewandten Seite hin öffnet.

13. Furchenöffner nach einem der Ansprüche 4 bis 12, dadurch gekennzeichnet, daß die zweite Einrichtung zum Ablegen eines zweiten Materials im wesentlichen in einer durch die erste Scheibe (24) definierten Schattenfläche angebracht ist, so daß die zweite Einrichtung in erster Linie in zuvor durch die Scheiben (24, 70) bearbeitetem Boden arbeitet, um Seitenkräfte auf die zweite Einrichtung zu reduzieren.

14. Furchenöffner nach einem der Ansprüche 5 bis 13, dadurch gekennzeichnet, daß die konvexe Seite der zweiten Scheibe (70) beim Formen der zweiten Furche (S1) Boden über in der ersten Furche (F1) abgelegtes Material (F) drängt.

15. Furchenöffner nach einem der vohergehenden Ansprüche, gekennzeichnet durch ein schließendes Rad (116), das der zweiten Scheibe (70) nachläuft und eine Seite der zweiten Furche (S1) bricht und in der zweiten Furche (S1) abgelegtes zweites Material (S) bedeckt.

16. Furchenöffner nach einem der Ansprüche 7 bis 15, dadurch gekennzeichnet, daß die zweite Scheibe (70) an der inneren konkaven Wölbung der Scheibe (70) eine abgeschrägte Kante (70e) aufweist.

17. Furchenöffner nach einem der Ansprüche 4 bis 16, dadurch gekennzeichnet, daß die zweite Einrichtung in der Nähe der ersten Scheibe (24) angeordnet ist und Verunreinigungen von einer ersten Fläche der Scheibe (24) kratzt.

18. Furchenöffner nach einem der vorhergehenden Ansprüche, dadurch gekennzeichnet, daß die erste Scheibe (70) flach ist.

19. Furchenöffner nach einem der Ansprüche 10 bis 18, dadurch gekennzeichnet, daß das Tiefeneinstellrad (32) eine Einstellvorrichtung aufweist, die sich durch die Nabe (26) der ersten Scheibe (24) erstreckt.

20. Furchenöffner nach einem der vorhergehenden Ansprüche, dadurch gekennzeichnet, daß die erste Scheibe (24) und/oder die zweite Scheibe (70) gegenüber der Bewegungsrichtung in einen Winkel von drei bis fünfzehn Grad angeordnet ist.

21. Furchenöffner nach einem der vorhergehenden Ansprüche, dadurch gekennzeichnet, daß die zweite Scheibe (24) gegenüber einer vertikalen Ebene in einem Winkel von vorzugsweise etwa 12 Grad angeordnet ist.

22. Furchenöffner nach einem der Ansprüche 4 bis 21, dadurch gekennzeichnet, daß die zweite Einrichtung einen Abstreifer (88) zum Entfernen von Verunreinigungen von der zweiten Scheibe (70) aufweist, der vorzugsweise im oberen vorderen Segment der zweiten Scheibe, insbesondere an der konkaven Innenseite, angebracht ist.
